# EUROPEAN PATENT SPECIFICATION

(11) **EP 2 818 783 B1**
(45) Date of publication and mention of the grant of the patent: **20.06.2018**
(21) Application number: 13382256.9
(22) Date of filing: 28.06.2013
(51) Int. Cl.: G01M 3/00, F16L 55/027, F15D 1/00

(54) **Flow guidance device for insulation muff venting holes**
Strömungsführungsvorrichtung zur Isolierung von Muffenbelüftungsöffnungen
Dispositif de guidage d'écoulement de trous de ventilation par manchon d'isolation

(43) Date of publication of application: 31.12.2014
(73) Proprietor: Airbus Operations, S.L., 28906 Getafe Madrid (ES); Airbus Operations GmbH, 21129 Hamburg (DE)
(72) Inventor: Castillo de Alvear, Marta, 28906 Getafe (Madrid) (ES); Gonzàlez Morcillo, José Javier, 28906 Getafe (Madrid) (ES); Bewersdorf, Ralk, 21129 Hamburg (DE); Krakowski, Darius, 21129 Hamburg (DE); Prieto Padilla, Juan Tomàs, 28906 Getafe (Madrid) (ES)
(74) Representative: Elzaburu S.L.P.

(56) References cited:
- EP-A2- 0 266 566
- DE-U1-202009 002 701
- GB-A- 1 253 749
- US-A- 5 592 969
- US-A1- 2008 156 385
- US-A1- 2010 213 284
- US-A1- 2011 061 757
- US-A1- 2012 018 014

## Description

### FIELD OF THE INVENTION

This invention refers to a hot air leak detection system for hot air ducts, comprising an insulation muff and a flow guidance device, especially applicable to aircraft.

### BACKGROUND OF THE INVENTION

Early detection of hot air leakages in aircraft systems is required to prevent any damage to the structure and components, and fire and/or explosions in the fuel tanks of the aircraft, which could result from duct leak or rupture.

For this purpose, insulation muffs are installed in connections between ducts. Typically an insulation muff comprises an inner covering film, an outer covering film, an insulation material in between and a venting hole to allow hot air flow leakage from the duct to be directed towards over-heat sensors, for instance, substantially parallel spaced cables, and in that way to detect the leak.

This leak detection system has the following problems:
- It may be over-sensitive and provide detection at low leakages which are not dangerous for the aircraft structure and its systems. Natural thermal convection at those low flows produces non desirable detections.
- Its design is sensitive to sensing element installation tolerances and to the relative position of sensing elements and the venting hole of the muff. Sensing elements not faced towards the venting hole of the muff lead to degraded leak detection capability.

GB 2226417 A discloses a vent nozzle assembly for ducted flow leak detection systems. The assembly comprises a vent nozzle engaging a vent hole in the fluid duct assembly and an interlocking ring clamping the vent nozzle in place. In the ducted flow leak detection system a fluid carrying duct, particularly carrying hot air, is contained within a concentric outer layer of material, e.g., fibreglass of greater diameter to form an insulating air space containing a suitable insulating material. The outer layer includes one or more vent holes so that any duct leak into the insulating layer will be directed outwardly into contact with suitably adjacent leak detection means. Each vent hole includes a vent nozzle, having a configuration designed to aid direction of the leak flow, retain the insulating material and prevent the ingress of fluids from external sources.

This proposal allows directing leaks towards the sensors, but has some problems. It may detect" false leaks": as it contains big holes, non desired detections are produced; the pressurization of the flow is not sufficient and the flow is not homogeneous. Another known leak detection system is disclosed in US2012/0018014A1. GB 1253749 A discloses a distribution system for fluids, comprising first conduit means, inlet means for supplying fluid under pressure to the interior of said first conduit means, second conduit means positioned to receive fluid from first conduit outlet means distributed along the length of said first conduit means, and second conduit outlet means distributed along the length of said second conduit means to provide uniform fluid flow per unit length therefrom along the length of said second conduit means, wherein said first conduit outlet means is distributed substantially uniformly along the length of said first conduit means to supply fluid therefrom to said second conduit means and has a substantially uniform outlet area per unit length of said first conduit means in the region of communication with said second conduit means, said first conduit means being proportioned to have an internal fluid pressure which is substantially uniform along the length thereof when fluid is admitted under pressure to the interior thereof through said inlet means, whereby fluid applied to said inlet means is transmitted to said second conduit means at a substantially uniform rate per unit length along the length of said first conduit outlet means.

US 2011/061757 A1 relates to an anti-resonant pulse diffuser, and discloses an elongate flow tube having an interior cross-section surrounding a long axis, an inlet end for receiving a fluid flow and an outlet end for discharging the fluid flow, and a diffuser plate spanning the interior cross-section to separate the flow tube into an inlet chamber and an outlet chamber. The diffuser plate includes a plurality of apertures formed therein for directing the fluid flow from the inlet chamber to the outlet chamber. Furthermore, the diffuser plate is orientated longitudinally at a shallow angle with respect to the long axis of the flow tube to provide an indeterminate pulsation reflective surface, with the inlet chamber gradually decreasing in cross-sectional area and the outlet chamber gradually increasing in cross-sectional area across the length of the flow tube.

US 2008/156385 A1 relates to a baffle system for use in an air conditioning unit, in particular an aircraft air conditioning unit, that comprises a baffle frame that is attachable to an open end of a pipeline of the air conditioning unit and a baffle that defines a flow cross-section of the pipeline. A receiving groove is formed on the baffle frame and/or the baffle which extends over only a portion of the circumference of the baffle frame and/or the baffle. The baffle is insertable into the receiving groove formed on the baffle frame, and/or a first guide web formed on the baffle frame is insertable into the receiving groove formed on the baffle.

### SUMMARY OF THE INVENTION

The object of the present invention is to provide a hot air leak detection system for hot air ducts, comprising an insulation muff and a flow guidance device, able to provide a homogeneous flow towards the sensing element, in order to avoid false warnings due to low leaks or installation tolerances.

The invention provides a hot air leak detection system according with claim 1 wherein a flow guidance device for insulation muff venting holes, which comprises a grid with through holes, in which the holes of the grid are aligned in several rows, the rows having the same direction, in which in the direction perpendicular to that of the orientation of said rows of holes of the grid, the holes are aligned in an alternate way, the height of the grid being comprised between 2 and 25 mm. The device has an arcuate shape and it additionally comprises a joining part for its joining with the insulation muff.

The geometry of the grid of the invention allows to pressurize the insulation muff and thus obtaining a homogeneous outflow.

Another advantage of the invention is that it allows obtaining a device adaptable to different configurations, according to the desired application, by changing some geometric parameters. For instance, each venting hole has an optimised device to pressurize the insulation muff, driving the leak air towards the sensor at the required distance (it adapts to different distances between the insulation muff and the sensor).

Another advantage of the invention is that it allows to obtain a homogeneous temperature profile near the device.

Other characteristics and advantages of the present invention will be clear from the following detailed description of an embodiment illustrative of its object in relation to the attached figures.

### BRIEF DESCRIPTION OF DRAWINGS

Figure 1 shows a schematic view of a leak in a hot air duct with an insulating muff.
Figure 2 shows a plant view of a flow guidance device for insulation muff venting holes of the hot air leak detection system.
Figure 3 shows a longitudinal section view of a flow guidance device for insulation muff venting holes of the hot air leak detection system according with the present invention.
Figure 4 shows a cross section view of a flow guidance device for insulation muff venting holes of the invention.
Figure 5 shows a three dimensional image of the device of the invention.
Figs. 6 and 7 show plant views of several configurations of a device which is not part to the present invention.
Fig. 8 shows a longitudinal section view of a flow guidance device not part to the present invention.

### DETAILED DESCRIPTION OF THE INVENTION

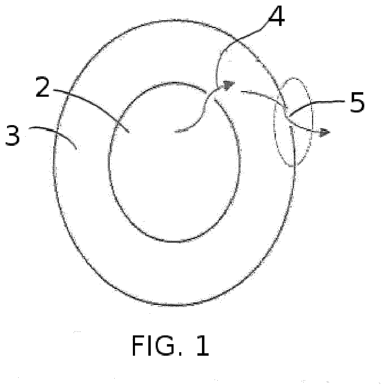

Fig. 1 shows a schematic view of a leak in a hot air duct 2 with an insulating muff 3. It can be seen that the venting hole 5 of the insulation muff 3 allows that the leak 4 of hot air flow is directed outwards, specifically towards external sensing elements (not shown).

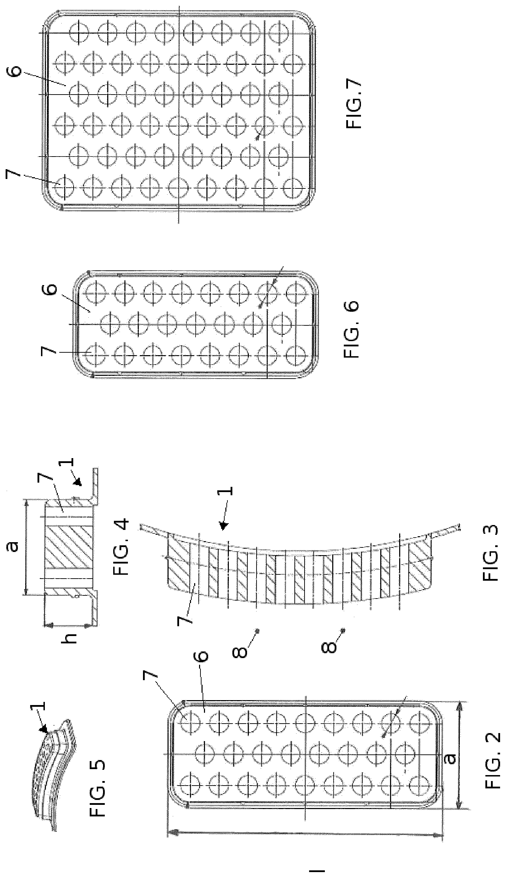

Figs. 2, 3, 4 and 5 show several views of a flow guidance device 1 for insulation muff 3 venting holes 5 of the invention. These figures show that said device 1 comprises a grid 6 with through holes 7 (of circular shape in the shown embodiment). The holes 7 of the grid 6 are aligned in several rows in the direction corresponding to the long side of the device 1, all the rows having the same direction, and in the direction perpendicular to that of the orientation of said rows of holes 7 of the grid 6 (i.e., in the direction corresponding to the short side of the device) the holes 7 are aligned in an alternate way.

It can be seen that the alignments are constituted by the lines that join the centres of the respective holes 7. It can also be seen that the distance between alignments placed on the same direction may be constant.

In figure 2 the represented holes 7 are circular, although they may have other shapes (for instance, polygonal or elliptical).

Figure 3 shows a longitudinal section view of a flow guidance device 1 for insulation muff 3 venting holes 5 of the invention and two sensing elements 8 facing said device 1. The suitable height of said device 1 allows the appropriate guiding of the flow and its homogeneity at the exit.

The embodiment of device 1 shown in figures 3 and 5 has an arcuate shape, to be able to adapt to the curvature of ducts 2.

Figures 6 and 7 show several configurations of the device 1 not part of the invention. In this case they are configurations with a rectangular prismatic shape, and the plant views of same are represented. The rectangular design allows that the two sensing elements 8 may be covered without needing a device 1 of big dimensions, by orientating the long sides in the desired direction.

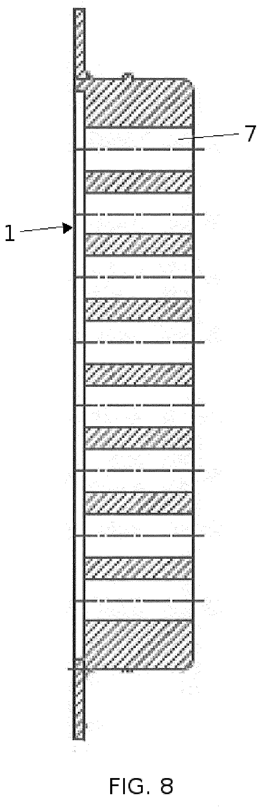

Figure 8 shows a longitudinal section view of a device 1 not part the invention, with a rectangular prismatic configuration different to that of figure 3.

The device 1 of the invention may be secured to the insulation muff 3 by means of a joining part. The joining of the flow guidance device 1 and the insulation muff 3 may also be effected by other means (for instance, a special silicone).

The function of the grid 6 with holes 7 of the invention is to pressurize the insulation muff 3 to obtain a uniform temperature profile. By increasing the size of the holes 7 of the grid 6, the relative pressure would be lower and low leaks would be detectable. The temperature profile would not be uniform due to low pressurization. That is why it is necessary to get a suitable size for the holes 7.

For circular holes 7, the most suitable diameters are between 1 mm and 8 mm, a preferred value being 4 mm.

Other suitable dimensions for device 1 are as follows:
- Width (a): between 5 and 70 mm
- Length (I): between 5 and 100 mm
- Height (h): between 2 and 25 mm, preferably between 5 and 20 mm, and more preferably 10 mm.

The material used in device 1 has to be robust enough to withstand high temperatures in continuous operation during the whole life of the aircraft. There must be no degradation of its properties, no deformations, not bending, etc. One example of a suitable material is polyether ether ketone PEEK (organic polymer thermoplastic), used in engineering applications. The preferred embodiments describe modifications comprised in the scope defined by the following claims.

## Claims

1. Hot air leak detection system comprising:
- an insulation muff (3) for a hot air duct (2), the insulation muff (3) having venting holes (5), and
- a flow guidance device (1) for the insulation muff (3) venting holes (5), the flow guidance device (1) comprising a grid (6) with through holes (7), the through holes (7) of the grid (6) being aligned in several rows in the direction corresponding to the long side of the flow guidance device (1), the rows having the same direction, such that in the direction perpendicular to that of the orientation of said rows of said through holes (7) of the grid (6) the said through holes (7) are aligned in an alternate way, wherein the alignments are constituted by the lines that join the centres of the said through holes (7),
the height of the grid (6) being comprised between 2 and 25 mm, the flow guidance device (1) additionally comprising a joining part for its joining with the insulation muff (3) wherein the flow guidance device (1) has an arcuate shape to be able to adapt to the curvature of the hot air duct (2), .

2. Hot air leak detection system according to claim 1, **characterized in that** the through holes (7) of the grid (6) are circular.

3. Hot air leak detection system according to claim 2, **characterized in that** the circular through holes (7) have a diameter comprised between 1 mm and 8 mm.

4. Hot air leak detection system according to claim 3, **characterized in that** the circular through holes (7) have a diameter of 4 mm.

5. Hot air leak detection system according to claim 1, **characterized in that** the through holes (7) are polygonal or elliptical.

6. Hot air leak detection system according to any of the previous claims, **characterized in that** it has a rectangular prismatic shape.

7. Hot air leak detection system according to claim 1, **characterized in that** the height of the grid is comprised between 5 and 20 mm.

8. Hot air leak detection system according to claim 7, **characterized in that** the height of the grid (6) is 10 mm.

## Patentansprüche

1. Ein Leckerfassungssystem für warme Luft, das umfasst:
eine Isoliermuffe (3) für einen Durchgang für warme Luft (2), wobei die Isoliermuffe (3) Belüftungslöcher (5) umfasst, und
eine Strömungsleitvorrichtung (1) für die Belüftungslöcher (5) der Isoliermuffe (3), wobei die Strömungsleitvorrichtung (1) ein Gitter (6) mit Durchgangslöchern (7) umfasst, wobei die Durchgangslöcher (7) des Gitters (6) in mehreren Reihen in der Richtung angeordnet sind, die zu der Längsseite der Strömungsleitvorrichtung (1) korrespondiert, wobei die Reihen dieselbe Richtung haben, so dass in der Richtung senkrecht zu der der Ausrichtung der Reihen der Durchgangslöcher (7) des Gitters (6) die Durchgangslöcher (7) in einer alternierenden Weise angeordnet sind, wobei die Ausrichtungen durch die Linien gebildet werden, die die Zentren der Durchgangslöcher (7) verbinden, wobei die Höhe des Gitters (6) zwischen 2 und 25 mm beträgt, wobei die Strömungsleitvorrichtung (1) zusätzlich ein Verbindungsteil für deren Verbindung mit der Isoliermuffe (3) umfasst,
wobei die Strömungsleitvorrichtung (1) eine bogenförmige Form hat, um sich an die Krümmung des Durchgangs für warme Luft (2) anpassen zu können.

2. Leckerfassungssystem für warme Luft gemäß Anspruch 1, **dadurch gekennzeichnet, dass** die Durchgangslöcher (7) des Gitters (6) rund sind.

3. Leckerfassungssystem für warme Luft gemäß Anspruch 2, **dadurch gekennzeichnet, dass** die runden Durchgangslöcher (7) einen Durchmesser haben, der zwischen 1 mm und 8 mm beträgt.

4. Leckerfassungssystem für warme Luft gemäß Anspruch 3, **dadurch gekennzeichnet, dass** die runden Durchgangslöcher (7) einen Durchmesser von 4 mm haben.

5. Leckerfassungssystem für warme Luft gemäß Anspruch 1, **dadurch gekennzeichnet, dass** die Durchgangslöcher (7) polygonal oder elliptisch sind.

6. Leckerfassungssystem für warme Luft gemäß einem der vorigen Ansprüche, **dadurch gekennzeichnet, dass** es eine rechteckige prismatische Form hat.

7. Leckerfassungssystem für warme Luft gemäß Anspruch 1, **dadurch gekennzeichnet, dass** die Höhe des Gitters zwischen 5 und 20 mm beträgt.

8. Leckerfassungssystem für warme Luft gemäß Anspruch 7, **dadurch gekennzeichnet, dass** die Höhe des Gitters (6) 10 mm beträgt.

## Revendications

1. Système de détection de fuite d'air chaud comprenant :
- un manchon isolant (3) pour un conduit d'air chaud (2), le manchon isolant ayant des trous d'évent (5), et
- un dispositif de guidage de débit (1) pour les trous d'évent (5) du manchon isolant (3), le dispositif de guidage de débit (1) comprenant une grille (6) avec des trous débouchants (7), les trous débouchants (7) de la grille (6) étant alignés selon plusieurs lignes dans la direction correspondant au côté long du dispositif de guidage de débit (1), les lignes ayant la même direction, de sorte que dans la direction perpendiculaire à celle de l'orientation desdites lignes desdits trous d'évent (7) de la grille (6),
lesdits trous d'évent (7) sont alignés de façon alternée, de sorte que les alignements sont constitués par les lignes joignant les centres desdits trous débouchants (7),
la hauteur de la grille (6) étant comprise entre 2 et 25 mm, le dispositif de guidage de débit (1) comprenant additionnellement une pièce de jonction pour le joindre au manchon isolant (3),
dans lequel le dispositif de guidage de débit (1) a une forme arquée pouvant être adaptée à la courbure du conduit d'air chaud (2).

2. Système de détection d'air chaud selon la revendication 1, **caractérisé en ce que** les trous débouchants (7) de la grille (6) sont circulaires.

3. Système de détection d'air chaud selon la revendication 2, **caractérisé en ce que** les trous débouchants (7) circulaires ont un diamètre compris entre 1 mm et 8 mm.

4. Système de détection d'air chaud selon la revendication 3, **caractérisé en ce que** les trous débouchants (7) circulaires ont un diamètre de 4 mm.

5. Système de détection d'air chaud selon la revendication 1, **caractérisé en ce que** les trous débouchants (7) sont polygonaux ou elliptiques.

6. Système de détection d'air chaud selon l'une quelconque des revendications précédentes, **caractérisé en ce qu'**il a une forme rectangulaire prismatique.

7. Système de détection d'air chaud selon la revendication 1, **caractérisé en ce que** la hauteur de la grille est comprise entre 5 et 20 mm.

8. Système de détection d'air chaud selon la revendication 7, **caractérisé en ce que** la hauteur de la grille (6) est 10 mm.
